# EUROPÄISCHE PATENTANMELDUNG

(11) **EP 3 305 623 A1**
(43) Veröffentlichungstag der Anmeldung: **11.04.2018**
(21) Anmeldenummer: 17001624.0
(22) Anmeldetag: 04.10.2017
(51) Int. Cl.: B62B 3/00

(54) **SPURTREUER WAGEN FÜR DEN INNERBETRIEBLICHEN TRANSPORT VON GÜTERN**

(30) Priorität: 07.10.2016 DE 102016011949
(71) Anmelder: FM Systeme Förder-und Montagetechnik Schmalzhofer GmbH, 75031 Eppingen (DE); Antares Polska, 58-260 Bielawa (PL)
(72) Erfinder: CZARNACKI, Krzysztof, 58260 Bielawa (PL)
(74) Vertreter: Clemens, Gerhard

(57) **Zusammenfassung**

Ein Wagen (30) für den innerbetrieblichen Transport von Gütern, mit einem vorderen Bereich (V) und einem hinteren Bereich (H), mit einem Rahmen (40), in dessen äußeren Eckbereichen jeweils eine Lenkrolleneinheit (16) mit einer um eine Drehachse (D) schwenkbaren Lenkrolle vorhanden ist, einer im vorderen Bereich (V) des Wagens (30) vorhandenen Deichseleinheit (50) mit einer um eine Drehachse (D6) in eine Schwenkrichtung (Z) schwenkbaren Deichsel (51), wobei die Deichseleinheit (50) mit den Lenkrolleneinheiten (16) mittels eines Spurhaltesystems (10) in Wirkverbindung bringbar ist, und durch ein Schwenken der Deichsel (51) in Schwenkrichtung (Z) eine Ausrichtung der Lenkrollen entlang bogenförmiger Bahnlinien erfolgt, gekennzeichnet dadurch, dass die Lenkrolleneinheiten (16) jeweils modular, das heißt mehrteilig, zumindest teilweise lösbar vorhanden sind und/oder die Deichseleinheit (50) modular, das heißt mehrteilig, zumindest teilweise lösbar vorhanden ist und/oder das Spurhaltesystem (10) modular, das heißt mehrteilig, zumindest teilweise lösbar vorhanden ist.

## Beschreibung

### TECHNISCHES GEBIET

Die folgende Erfindung betrifft einen Wagen für den innerbetrieblichen Transport von Gütern, mit einem vorderen Bereich und einem hinteren Bereich, mit einem Rahmen, in dessen äußeren Eckbereichen jeweils eine Lenkrolleneinheit mit einer um eine Drehachse schwenkbaren Lenkrolle vorhanden ist, einer im vorderen Bereich des Wagens vorhandenen Deichseleinheit mit einer um eine Drehachse in eine Schwenkrichtung schwenkbaren Deichsel, wobei die Deichseleinheit mit den Lenkrolleneinheiten mittels eines Spurhaltesystems in Wirkverbindung bringbar ist, und durch ein Schwenken der Deichsel in Schwenkrichtung eine Ausrichtung der Lenkrollen entlang bogenförmiger Bahnlinien erfolgt.

### STAND DER TECHNIK

Wagen mit einem Spurhaltesystem, auch spurtreue Wagen genannt, werden in der internen Logistik - Intralogistik - für die Versorgung von Montagelinien mit Montagematerial eingesetzt, bzw. für den innerbetrieblichen Transport von Materialien durch Routenzüge eingesetzt. Wagen mit einem Spurhaltesystem zeichnen sich dadurch aus, dass eine komplexe Mechanik vorhanden ist, welche alle Räder durch das Schwenken einer Deichsel so steuert und bewegt, sodass der Wagen mitsamt der angeschlossenen Wagen (in der Regel 3-5 Wagen und mehr) bei einer Kurvenfahrt mit dem gleichen Bogenradius fährt wie das voraneilende Zugfahrzeug. Vorteilhaft an dem Einsatz von Spurhaltesystemen ist dabei, dass Fahrwege mit sehr engen Kurven möglich sind. Spurhaltesysteme werden heutzutage immer mehr eingesetzt, da die Fahrstraßen in der Fertigung und Montage möglichst wenig Fläche (geringerer Fahrbahnbreiten) im Verhältnis zu den Produktionsflächen einnehmen. Zudem ist durch Einsatz von spurtreuen Wagen die Gefahr von Unfällen und Beschädigungen von Einrichtungen und Transportmitteln wesentlich vermindert.
Bisher werden diese Wagen, auch wegen der erforderlichen Robustheit in nahezu komplett geschweißter Ausführung gebaut. Änderungen der Wagengröße sind nur mit sehr hohem Aufwand möglich und nicht wirtschaftlich, so dass diese teuren Einrichtungen bei einer Änderung der Wagengröße in der Regel verschrottet werden müssen.

### DARSTELLUNG DER ERFINDUNG

Ausgehend von dem genannten Stand der Technik liegt der vorliegenden Erfindung das technische Problem beziehungsweise die Aufgabe zugrunde, einen Wagen der eingangs genannten Art anzugeben, der wirtschaftlich hergestellt werden kann, einfach montiert werden kann, schnell und kostengünstig auf verschiedene Rahmengrößen umstellbar ist und eine dauerhaft zuverlässige Transportfunktion besitzt.

Die erfindungsgemäße Vorrichtung der eingangs genannten Art ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche.

Der erfindungsgemäße Wagen zeichnet sich demgemäß dadurch aus, dass die Lenkrolleneinheiten jeweils modular, das heißt mehrteilig, zumindest teilweise lösbar vorhanden sind und/oder die Deichseleinheit modular, das heißt mehrteilig, zumindest teilweise lösbar vorhanden ist und/oder das Spurhaltesystem modular, das heißt mehrteilig, zumindest teilweise lösbar vorhanden ist.

Durch den Einsatz des erfindungsgemäßen Wagens ist ein schnelles Umbauen des Wagens bei einer Änderung der Rahmengröße problemlos möglich, wobei der Großteil der im Wagen verbauten Bauteile wiederverwertet werden kann, ohne dass die Funktionalität des Wagens, insbesondere des Spurhaltesystems des Wagens, beeinträchtigt wird. Somit zeichnet sich der Einsatz des erfindungsgemäßen Wagens durch eine hohe Wirtschaftlichkeit aus.

Eine besonders bevorzugte Ausgestaltung des Wagens, die eine dauerhaft zuverlässige Funktionalität gewährleistet zeichnet sich dadurch aus, dass der Rahmen in seinen äußeren Eckbereichen jeweils fest verschweißt vorhanden ist oder der Rahmen in seinen äußeren Eckbereichen jeweils ein Eckmodul aufweist, über welche der Rahmen zusammen gehalten wird und an welches die Lenkrolleneinheiten am Rahmen lösbar oder fest verbunden vorhanden sind.

Bevorzugt ist der Wagen so gestaltet, dass das Spurhaltesystem im hinteren Bereich des Wagens eine, um eine Drehachse schwenkbare, Aufnahmeeinheit aufweist.

Eine besonders vorteilhafte Weiterbildung, die eine wirtschaftliche Herstellung des Wagen gewährleistet, zeichnet sich dadurch aus, dass im hinteren Bereich des Wagens das Spurhaltesystem ein hinteres Verbindemittel aufweist, an welches die Aufnahmeeinheit und/oder die Eckmodule und/oder der Rahmen fest oder lösbar verbunden vorhanden ist/sind und/oder im vorderen Bereich des Wagens das Spurhaltesystem ein vorderes Verbindemittel aufweist, an welches die Deichseleinheit und/oder die Eckmodule und/oder der Rahmen fest oder lösbar verbunden vorhanden ist/sind.

Ein besonders einfacher Umbau des Wagens kann dadurch erreicht werden, dass das hintere Verbindemittel und/oder das vordere Verbindemittel zumindest in einer seiner/ihren Längsrichtungen teleskopierbar und arretierbar ausgebildet ist/sind.

Bevorzugt ist der Wagen so gestaltet, dass das hintere Verbindemittel und/oder das vordere Verbindemittel lösbare und/oder fest verbundene Anschlüsse aufweist/aufweisen, an welchen die Eckmodule und/oder die Aufnahmeeinheit und/oder die Deichseleinheit und/oder die Lenkrolleneinheiten fest verbunden und/oder lösbar vorhanden ist/ sind.

Eine besonders vorteilhafte Gestaltung des Wagens zeichnet sich dadurch aus, dass die Lenkrolleneinheiten jeweils eine Aufnahmeplatte aufweisen, welche mindestens eine lösbare oder fest verbundene Gelenkstangenaufnahme aufweist, und/oder ein Lagerelement, welches die drehbare Lagerung für die um die Drehachsen schwenkbaren Lenkrollen ausbildet, aufweist.

Eine besonders vorteilhafte Weiterbildung des Wagens zeichnet sich dadurch aus, dass die Aufnahmeeinheit eine Aufnahmeplatte, welche mindestens eine lösbare oder fest verbundene Gelenkstangenaufnahme und eine lösbare oder fest verbundene hintere Zentralgelenkstangenaufnahme aufweist, und/oder ein Lagerelement, welches die drehbare Lagerung für die Aufnahmeplatte ausbildet, aufweist.

Bevorzug ist der Wagen so gestaltet, dass die Deichseleinheit eine Aufnahmeplatte aufweist, welche mindestens eine lösbare oder fest verbundene Gelenkstangenaufnahme aufweist und/oder einen Deichselkörper mit einem Drehbolzen aufweist, der drehbar um die Drehachse gelagert an der Aufnahmeplatte der Deichseleinheit vorhanden ist und eine lösbare oder fest verbundene vordere Zentralgelenkstangenaufnahme aufweist.

Bevorzugt ist der Wagen so gestaltet, dass das Spurhaltesystem ein hinteres Gestängesystem, bestehend aus einzelnen teleskopierbaren und arretierbaren und/oder starren Elementen, und/oder ein vorderes Gestängesystem, bestehend aus einzelnen teleskopierbaren und arretierbaren und/oder starren Elementen und/oder eine teleskopierbare und arretierbare oder starre Hauptgelenkstange aufweist.

Eine besonders vorteilhafte, wirtschaftliche Weiterbildung des Wagens zeichnet sich dadurch aus, dass die Elemente des hinteren Gestängesystem in ihren Endbereichen in Längsrichtung lösbare und/ oder fest verbundene Gelenkstangenköpfe aufweisen, welche an die Gelenkstangenaufnahmen der Aufnahmeeinheit und der Lenkrolleneinheiten anschließbar sind und/oder die Elemente des vorderen Gestängesystem in ihren Endbereichen in Längsrichtung lösbare und/oder fest verbundene Gelenkstangenköpfe aufweisen, welche an die Gelenkstangenaufnahmen der Aufnahmeplatten und der Deichseleinheit anschließbar sind und/oder die Hauptgelenkstange in ihren Endbereiche in Längsrichtung lösbare und/oder fest verbundene Gelenkstangenköpfe aufweist, welche an die hintere und vordere Zentralgelenkstangenaufnahmen anschließbar sind.

Ein besonders einfacher Umbau des Wagens kann dadurch erreicht werden, dass die Aufnahmeeinheit, die Lenkrolleneinheiten und/oder die Deichseleinheit derart gestaltet ist/sind, dass verschieden große Gelenkstangenaufnahmen, anschließbar sind, und/oder die Aufnahmeeinheit und/oder die Deichseleinheit derart gestaltet ist, dass verschieden große hintere und vordere Zentralgelenkstangenaufnahmen anschließbar sind.

Ein besonders wirtschaftlich Ausführungsform des Wagens zeichnet sich dadurch aus, dass das vordere Verbindemittel und/oder das hintere Verbindemittel als jeweils ein, insbesondere gesägtes, Rechteckrohr ausgebildet ist.

Bevorzugt ist der Wagen so gestaltet, dass die Deichseleinheit lösbare Haltebügel aufweist, mittels derer die Deichseleinheit mit dem Rahmen in Kontakt bringbar ist.

Eine besonders vorteilhafte, wirtschaftliche Weiterbildung des Wagens zeichnet sich dadurch aus, dass die Deichseleinheit, die Lenkrolleneinheit und/oder das Spurhaltesystem nachrüstbar sind.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche und der Beschreibung können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Darstellung eines zusammengebauten Wagens mit einem in seinen Eckbereichen über Eckmodule verschraubten Rahmen und einer Deichseleinheit, vier Lenkrolleneinheiten und einem Spurhaltesystem von schräg oben betrachtet,
- Fig. 2a: Explosionsdarstellung des Wagens gemäß Fig. 1, wobei auf die Darstellung der Deichsel verzichtet wird und die Rahmenstreben als Strichlinien eingezeichnet sind,
- Fig. 2b: Explosionsdarstellung des Wagens gemäß Fig.1 mit eingetragenen Pfeilen, welche die Verknüpfung der Bauteile veranschaulichen,
- Fig. 3: schematische Darstellung des Rahmens, der in seinen Eckbereichen über Eckmodule verschraubt ist, mit Lenkrollen und Lenkrollenhalterungen von schräg oben betrachtet,
- Fig. 4a: Explosionsdarstellung des hinteren Bereichs des Wagens, dargestellt ist ein über Eckmodule verschraubter Rahmen und ein hinteres Verbindemittel und lösbare Anschlüsse von schräg oben betrachtet,
- Fig. 4b: Bauteile gemäß Fig. 4a im verschraubten Zustand,
- Fig. 5a: Explosionsdarstellung einer Aufnahmeeinheit, einer hinteren Rahmenstrebe, dem hinteren Verbindemittel mit einem Anschluss, einer Hauptgelenkstange, einem Element des hinteren Gestängesystems (angeschlossen) und einer Kupplung von schräg oben betrachtet,
- Fig. 5b: Bauteile gemäß Fig. 5a im verschraubten Zustand,
- Fig. 6a: Explosionsdarstellung des hinteren Bereichs des Wagens (linksseitig), dargestellt sind ein verschraubter Rahmen, eine Lenkrolleneinheit, das hintere Verbindemittel mit einem Anschluss und die Elemente des hinteren Gestängesystems von schräg oben betrachtet,
- Fig. 6b: Bauteile gemäß Fig. 4a im verschraubten Zustand,
- Fig. 7a: Explosionsdarstellung des vorderen Bereichs des Wagens, dargestellt sind ein verschraubter Rahmen, eine Deichseleinheit, ein vorderes Verbindemittel und ein Element des vorderen Gestängesystems und die Hauptgelenkstange von schräg oben betrachtet,
- Fig. 7b: Bauteile gemäß Fig. 7a im verschraubten Zustand,
- Fig. 8: schematische Darstellung eines zusammengebauten Wagens gemäß Fig. 1 jedoch im Unterschied dazu mit einem in seinen Eckbereichen verschweißten Rahmen und ein an dem Rahmen angeschweißtes hinteres Verbindemittel und vorderes Verbindemittel von schräg oben betrachtet,
- Fig. 9a: Explosionsdarstellung des hinterer Bereichs des Wagens, dargestellt sind ein in seinen Eckbereichen verschweißter Rahmen und das hintere Verbindemittel, das am Rahmen angeschweißt ist und lösbare Anschlüsse von schräg oben betrachtet,
- Fig. 9b: Bauteile gemäß Fig. 9a im angeschlossenen Zustand.

### WEGE ZUM AUSFÜHREN DER ERFINDUNG

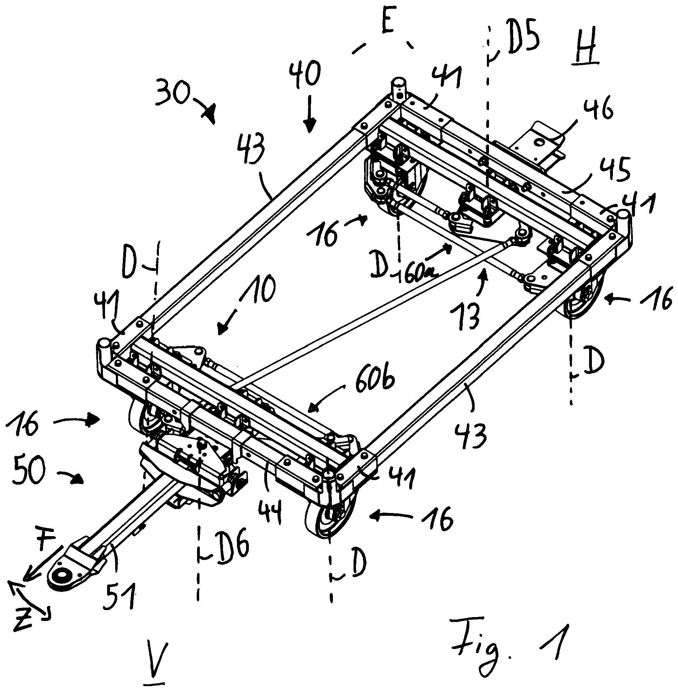

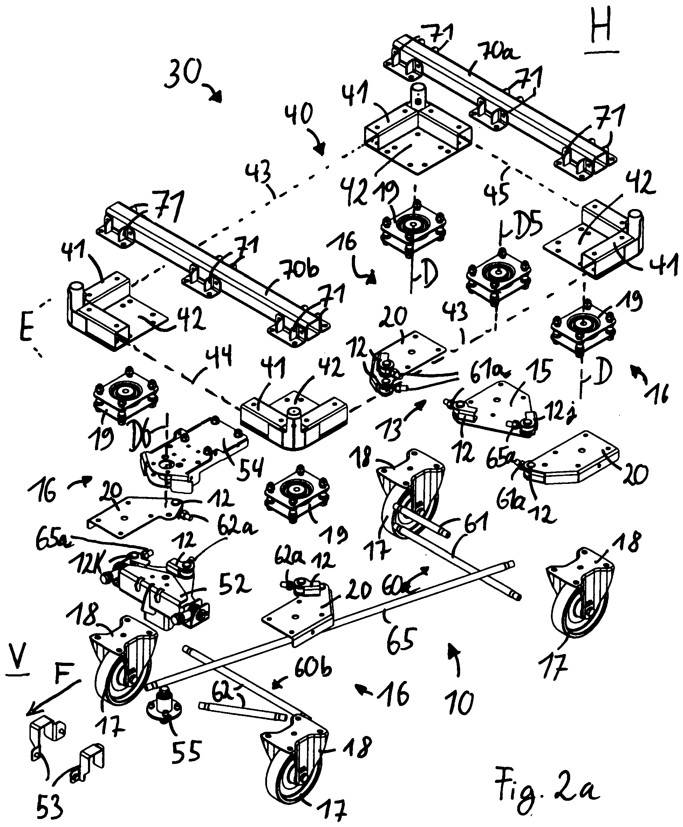

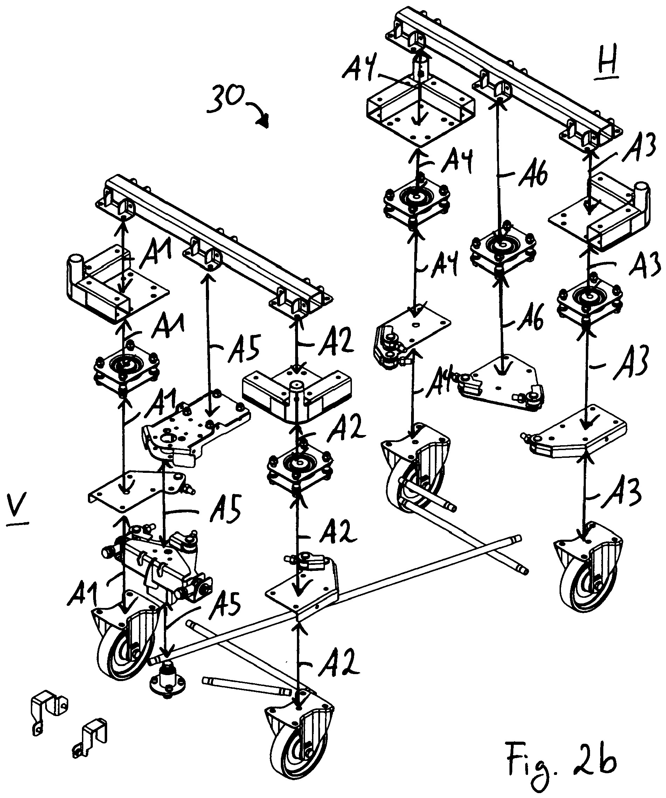

In Fig. 1 ist ein zusammengebauter Wagen 30 mit einem Rahmen 40, der in seinen Eckbereichen 42 über Eckmodule 41 verschraubt ist, dargestellt. In Fig. 2 ist selbiger Wagen 30 in einer Explosionsperspektive dargestellt, dabei sind alle wesentliche Einzelteile vorhanden, mit Ausnahme der Deichsel 51. Die seitlichen Rahmenstreben 43 und die vordere Rahmenstrebe 44 und die hintere Rahmenstrebe 45 sind durch Strichlinien angedeutet. Zum besseren Verständnis sind zusammengehörige Teile, die höhenmäßig übereinander angeordnet sind, zum Teil über die Pfeile A1 bis A6 in der Fig. 2b schematisch miteinander verknüpft.

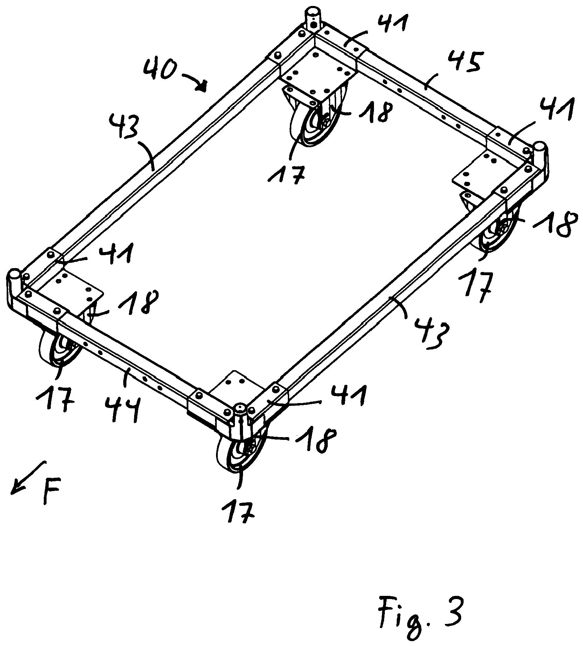

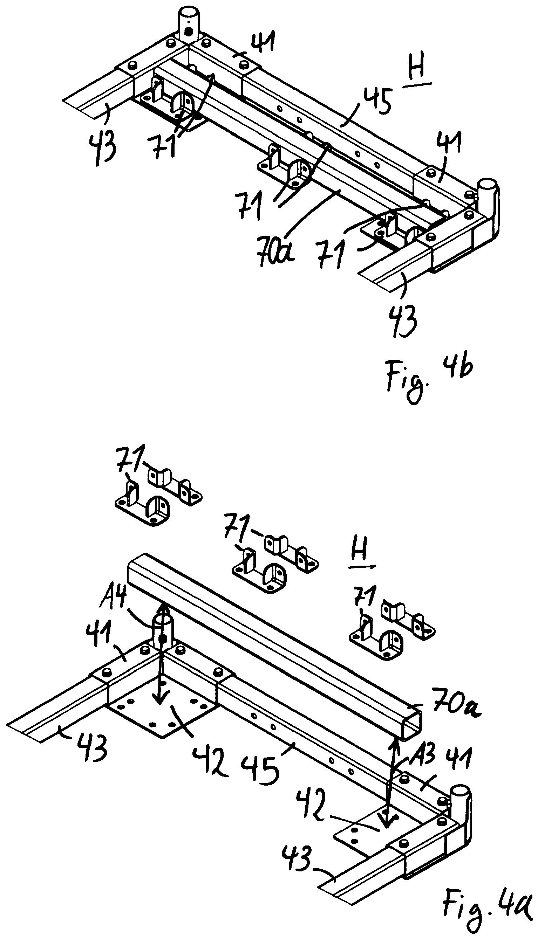

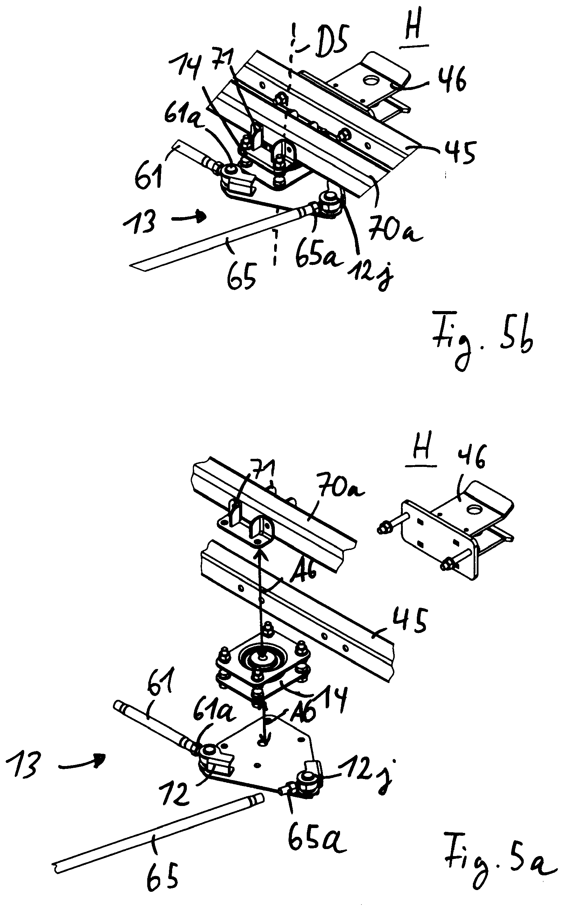

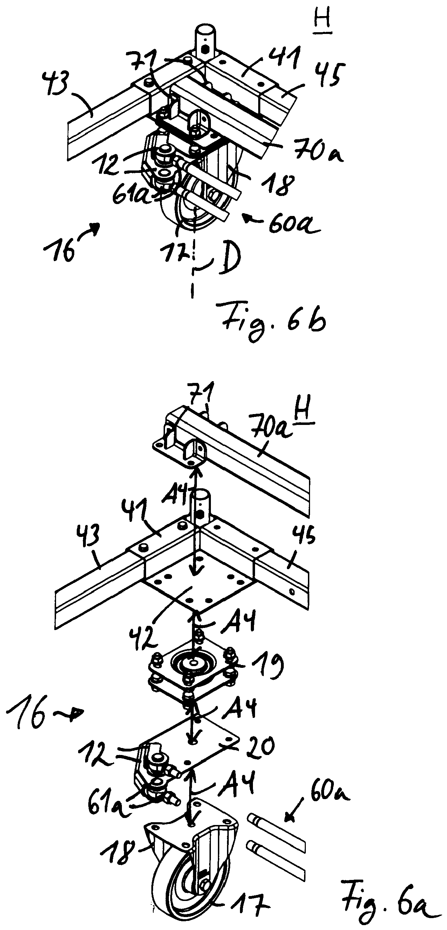

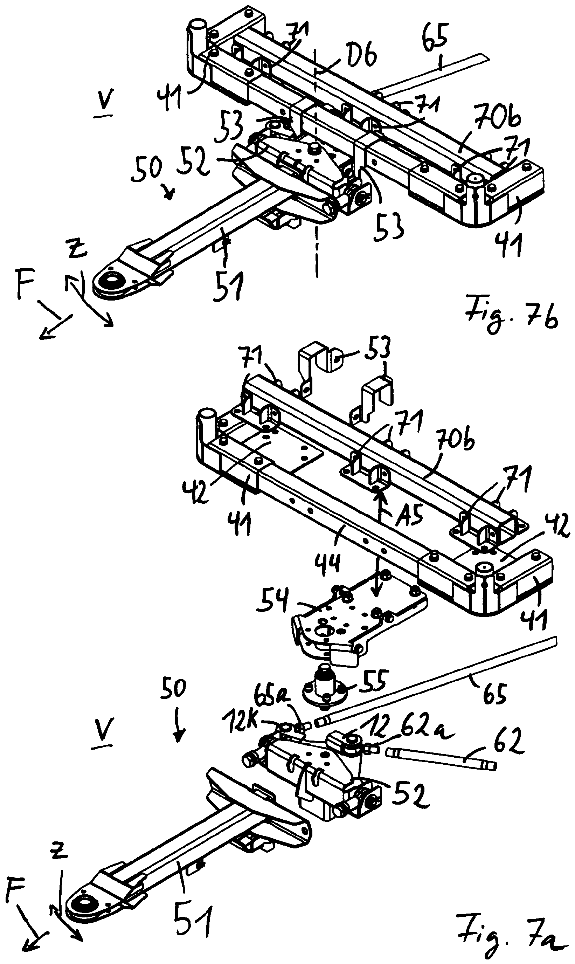

Der Rahmen 40 ist bei der verschraubten Ausführungsform, wie in den Fig. 1 bis 7b dargestellt, aus zwei seitlichen Rahmenstreben 43, die parallel zur Fahrtrichtung F verlaufen und einer vorderen Rahmenstreben 44, die im vorderen Bereich des Wagens V sitzt und einer hinteren Rahmenstrebe 45, die im hinteren Bereich des Wagens H sitzt, aufgebaut. Die vordere Rahmenstrebe 44 und die hintere Rahmenstrebe 45 verlaufen orthogonal zur Fahrtrichtung F, wobei der Rahmen 40 ein Rechteck mit vier in einer Ebene E liegenden Eckbereichen ausbildet.

In den Eckbereichen 42 des Rahmens 40 weist der Rahmen 40 jeweils ein Eckmodul 41, mit dem zwei nächstliegenden Enden der Streben des Rahmens 40 verschraubt sind auf, nämlich jeweils mit einer in Fahrtrichtung F liegenden seitlichen Rahmenstrebe 43 und einer orthogonal zu dieser verlaufenden vorderen Rahmenstrebe 44 oder hinteren Rahmenstrebe 45. An der hinteren Strebe 45 ist zudem eine Kupplung 46 angeschraubt.

Die Eckmodule 41 besitzen jeweils eine mit Bohrungen durchsetzte Grundplatte, die vorzugsweise rechteckig ausgebildet ist und welche jeweils zwei Strebenaufnahmen besitzt, welche Bohrungen aufweisen, mittels derer die Eckmodule 41 mit den in die Strebenaufnahmen eingeführten Streben 43, 44, 45 des Rahmens 40 durch Schrauben fixiert sind. Unterhalb der Eckmodule 41 ist jeweils unterseitig an diese eine Lenkrolleneinheit 16 angeschraubt. Diese besteht im Wesentlichen aus untereinander verschraubbaren Einzelbauteilen. Bestandteil der Lenkrolleneinheit 16 ist ein Lagerelement 19, welches unterseitig an das Eckmodul 41 angeschraubt ist und welches eine senkrecht zur Ebene E verlaufende Drehachse D ausbildet. Das Lagerelement 19 setzt sich aus zwei ähnlich- oder gleich aufgebauten Platten, die mittels eines Drehlagers um die Drehachse D gegenläufig verdrehbar sind, zusammen. An das Lagerelement 19 ist unterseitig eine Aufnahmeplatte 20 der Lenkrolleneinheit 16, an welche eine oder zwei Gelenkstangenaufnahmen 12 angeschlossen sind, angeschraubt. Unterseitig an die Aufnahmeplatte 20 ist eine Lenkrolle 17 über eine Lenkrollenhalterung 18 an diese angeschlossen, wobei die Lenkrollenhalterung 18 ein Drehlager, mit einer parallel zur Ebene E liegenden Drehachse aufweist, für die Lenkrolle 17 ausbildet. Die Platte unterhalb des Drehlagers des Lagerelements 19 der Lenkrolleneinheit 16, die Aufnahmeplatte 20 der Lenkrolleneinheit 16 und die Lenkrollenhalterung 18 besitzen Bohrungen, die so angeordnet sind, dass mehrere durchgängige Kanäle gebildet werden und die genannten Bauteile mittels Schrauben, die die Kanäle komplett durchstoßen, verschraubt sind.

Jeweils ein Lagerelement 19, eine Aufnahmeplatte 20 mitsamt der Gelenkstangenaufnahmen 12, die Lenkrolle 17 und die Lenkrollenhalterung 18 bilden jeweils die Lenkrolleneinheit 16 aus.

Oberhalb der Eckmodule 41 im hinteren Bereich H des Wagens 30 ist ein hinteres Verbindemittel 70a vorhanden, welches in seinen Endbereichen zwei Anschlüsse 71 und mittig einen Anschluss 71 aufweist. Das Lagerelement 19, insbesondere die Platte oberhalb des Drehlagers der Lenkrolleneinheit 16, das Eckmodul 41 und der Anschluss 71 besitzen Bohrungen, die so angeordnet sind, dass mehrere durchgängige Kanäle gebildet werden und die genannten Bauteile mittels Schrauben, die die Kanäle komplett durchstoßen, verschraubt sind. Das hintere Verbindemittel 70a ist zudem im Wesentlichen als gesägtes Rechteckrohr ausgebildet.

Mittig an das hintere Verbindemittel 70a ist unterhalb des mittig sitzenden Anschlusses 71 eine Aufnahmeeinheit 13 an diesen angeschraubt. Die Aufnahmeeinheit 13 besitzt ein Lagerelement 14, welches im hinteren Bereich H unterhalb des mittig sitzenden Anschlusses 71 an diese angeschraubt ist und welches eine senkrecht zur Ebene E verlaufende Drehachse D5 ausbildet. Das Lagerelement 14 entspricht in seinem Aufbau den Lagerelementen 19 der Lenkrolleneinheiten 16. An das Lagerelement 19 ist unterseitig eine Aufnahmeplatte 15 der Aufnahmeeinheit 13, an welche eine Gelenkstangenaufnahmen 12 angeschlossen ist, angeschraubt. Weiterhin ist an die Aufnahmeplatte 15 der Aufnahmeeinheit 13 eine hintere Zentralgelenkstangenaufnahme 12j angeschlossen. Somit bilden das Lagerelement 14, die Aufnahmeplatte 15 mitsamt der Gelenkstangenaufnahme 12 und der Zentralgelenkstangenaufnahme 12j die Aufnahmeeinheit 13 aus.

Oberhalb der Eckmodule 41 im vorderen Bereich V des Wagens 30 ist ein vorderes Verbindemittel 70b vorhanden, welches in seinen Endbereichen zwei Anschlüsse 71 und mittig einen Anschluss 71 aufweist. Die Platte oberhalb des Drehlagers des Lagerelements 19 der Lenkrolleneinheit 16, das Eckmodul 41 und der mittige Anschluss 71 im vorderen Bereich V besitzen Bohrungen, die so angeordnet sind, dass mehrere durchgängige Kanäle gebildet werden und die genannten Bauteile mittels Schrauben, die die Kanäle komplett durchstoßen, verschraubt sind. Weiterhin wird das vordere Verbindemittel 70b im Wesentlichen aus einem gesägten Rechteckrohr ausgebildet.

Mittig an das vordere Verbindemittel 70b ist unterhalb des mittig sitzenden Anschlusses 71 eine Deichseleinheit 50 an diesen angeschraubt. Die Deichseleinheit 50 besitzt eine Aufnahmeplatte 54, welche im vorderen Bereich V des Wagens 30 unterhalb des mittig sitzenden Anschlusses 71 an diesen angeschraubt ist und welche eine Lagerung mit einer senkrecht zur Ebene E verlaufenden Drehachse D6 für einen Deichselkörper 52, welcher in die Schwenkrichtung Z schwenkbar vorhanden ist, ausbildet. Weiterhin ist an den Deichselkörper 52 eine Gelenkstangenaufnahme 12 und eine vordere Zentralgelenkstangenaufnahme 12k angeschlossen. Eine Deichsel 51 ist vorhanden und um eine Drehachse, die parallel zu der vorderen Rahmenstrebe 44 verläuft am Deichselkörper 52 drehbar gelagert. Durch das Schwenken der Deichsel 51 in die Schwenkrichtung Z, die innerhalb der Ebene E verläuft oder innerhalb einer zur Ebene E parallelen Ebene verläuft, ist ein Schwenken des Deichselkörpers 52 um die Drehachse D6 herbeiführbar. Zwei Haltebügel 53 sind vorhanden, die die vordere Rahmenstrebe 44 umgreifen und mit der Deichseleinheit 50 verschraubt sind und somit eine zusätzliche Fixierung der Deichseleinheit 50 am Rahmen 40 ausbilden.

Somit setzt sich die Deichseleinheit 50 aus der Deichsel 51, dem Deichselkörper 52, mitsamt der Gelenkstangenaufnahme 12 und der Zentralgelenkstangenaufnahme 12k, der Aufnahmeplatte 54 und den Haltebügeln 53 zusammen. Im hinteren Bereich H des Wagens 30 ist ein hinteres Gestängesystem 60a, welches aus einzelnen stabförmigen Elementen 61 besteht, über Gelenkstangenköpfe 61a, die mit den Endbereichen der stabförmigen Elemente 61 verschraubt sind, an die Gelenkstangenaufnahmen 12 der hinteren beiden Lenkrolleneinheiten 16 und der Aufnahmeeinheit 13 drehbar gelagert angeschlossen. Im vorderen Bereich V des Wagens 30 ist ein vorderes Gestängesystem 60b, welches aus einzelnen stabförmigen Elementen 62 besteht, über Gelenkstangenköpfe 62a, die an die Endbereiche der stabförmigen Elemente 62 angeschraubt sind, an die Gelenkstangenaufnahmen 12 der vorderen beiden Lenkrolleneinheiten 16 und der Deichseleinheit 13 drehbar gelagert angeschlossen. Eine stabförmige Hauptgelenkstange 65 ist vorhanden und über Gelenkstangenköpfe 65a, die an den beiden Endbereichen der Hauptgelenkstange 65 verschraubt sind, an die vordere Zentralgelenkstangenaufnahme 12k der Deichseleinheit 50 und die hintere Zentralgelenkstangenaufnahme 12j der Aufnahmeeinheit 13 drehbar gelagert angeschlossen.

Somit bilden die Aufnahmeeinheit 13, das vordere und hintere Gestängesystem 60a, 60b mitsamt der Gelenkstangenköpfe 61a, 62a, die Hauptgelenkstange 65 mitsamt der Gelenkstangenköpfe 65a, das hintere Verbindemittel 70a und das vordere Verbindemittel 70b und die Anschlüsse 71 der Verbindemittel 70a, 70b in ihrer Gesamtheit im Wesentlichen ein Spurhaltesystem 10 aus.

Die Erfindung setzt dahingehend an, ein nahezu komplett modulares System zu schaffen, welches aus verschraubbaren Einheiten zusammengesetzt ist. Bei Änderung der Wagengrößen, wie es oft in einem flexiblen Fertigung vorkommt, können fast alle Elemente wieder verwendet werden und nur wenige neue Teile müssen ausgetauscht werden.

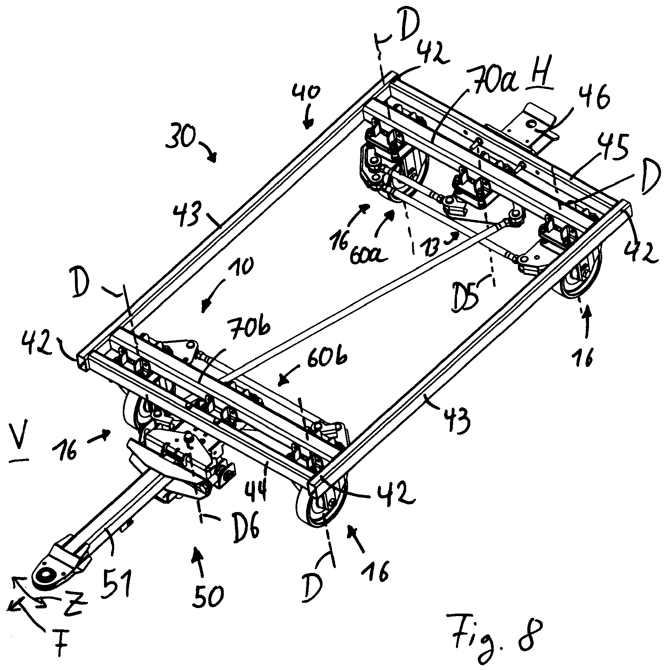

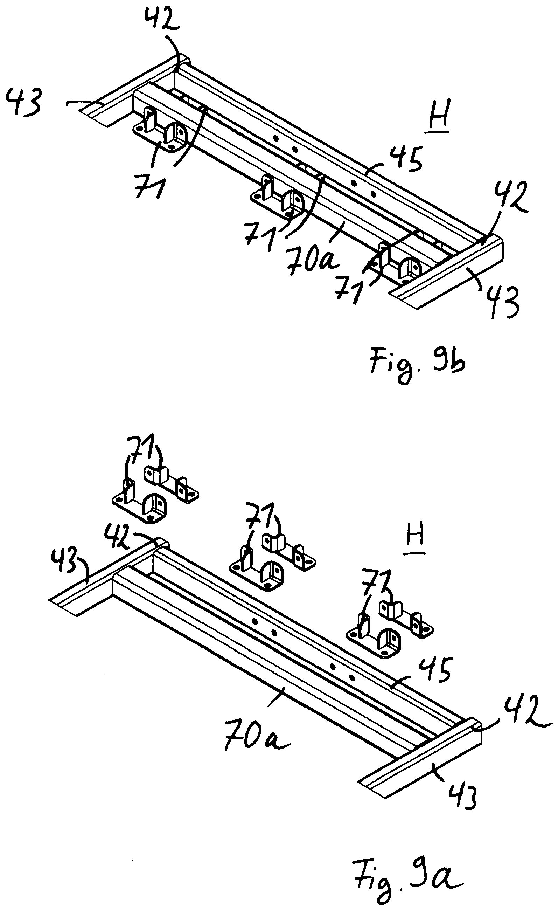

In den Fig. 8 bis 9b ist der Wagen in einer weiteren Ausführung dargestellt, in welcher die Streben des Rahmens 40 in den Eckbereichen 42 nicht über Eckmodule verschraubt ist sondern, die seitlichen Rahmenstreben 43 mit der vorderen Rahmenstrebe 44 und der hinteren Rahmenstrebe 45 in verschweißter Form fest verbunden sind. Darüber hinaus sind auch das hintere Verbindemittel 70a und das vordere Verbindemittel 70b mit den seitlichen Rahmenstreben verschweißt, sodass die Lenkrolleneinheiten 16 direkt an die Anschlüsse in den Eckbereichen 42 des Rahmens 40 angeschraubt sind.

Wird bei einer Kurvenfahrt die Deichsel 51 in die Schwenkrichtung Z um die Drehachse D6 geschwenkt, führt der Deichselkörper 52 gleichsam eine Schwenkbewegung um den selben Schwenkwinkel aus. Im vorderen Bereich V des Wagens 30 übernimmt das vordere Gestängesystem 60b die Aufgabe, die mechanischen Bewegung auf Teile der Lenkrolleneinheiten 16 weiterzuleiten, sodass als Folge die Lenkrollen 17 im vorderen Bereich V des Wagens 30 eine synchrone Schwenkbewegung ausführen. Weiterhin wird mittels der Hauptgelenkstange 65, der Aufnahmeeinheit 13 und dem hinteren Gestängesystem 60a die mechanische Bewegung des Deichselkörpers 52 auf die Lenkrolleneinheiten 16 im hinteren Bereich H des Wagens weitergeleitet, sodass als Folge die Lenkrollen 17 im hinteren Bereich des Wagens 30 eine synchrone Schwenkbewegung ausführen und als Resultat die sich an den Enden der seitlichen Rahmenstreben 43 gegenüberstehenden Lenkrollen 17 entlang einer Bahnlinie ausrichten.

## Patentansprüche

1. Wagen (30) für den innerbetrieblichen Transport von Gütern, mit einem vorderen Bereich (V) und einem hinteren Bereich (H), mit
- einem Rahmen (40), in dessen äußeren Eckbereichen (42) jeweils eine Lenkrolleneinheit (16) mit einer um eine Drehachse (D) schwenkbaren Lenkrolle (17) vorhanden ist,
- einer im vorderen Bereich (V) des Wagens (30) vorhandenen Deichseleinheit (50) mit einer um eine Drehachse (D6) in eine Schwenkrichtung (Z) schwenkbaren Deichsel (51), wobei
- die Deichseleinheit (50) mit den Lenkrolleneinheiten (16) mittels eines Spurhaltesystems (10) in Wirkverbindung bringbar ist, und durch ein Schwenken der Deichsel (51) in Schwenkrichtung (Z) eine Ausrichtung der Lenkrollen (17) entlang bogenförmiger Bahnlinien erfolgt,
**dadurch gekennzeichnet, dass**
- die Lenkrolleneinheiten (16) jeweils modular, das heißt mehrteilig, zumindest teilweise lösbar vorhanden sind und/ oder
- die Deichseleinheit (50) modular, das heißt mehrteilig, zumindest teilweise lösbar vorhanden ist und/oder
- das Spurhaltesystem (10) modular, das heißt mehrteilig, zumindest teilweise lösbar vorhanden ist.

2. Wagen nach Anspruch 1,
- **dadurch gekennzeichnet, dass**
- der Rahmen (40) in seinen äußeren Eckbereichen (42) jeweils fest verschweißt vorhanden ist oder
- der Rahmen (40) in seinen äußeren Eckbereichen (42) jeweils ein Eckmodul (41) aufweist, über welches der Rahmen (40) zusammen gehalten wird und an welche die Lenkrolleneinheiten (16) am Rahmen (40) lösbar oder fest verbunden vorhanden sind.

3. Wagen nach Anspruch 1,
- **dadurch gekennzeichnet, dass**
- das Spurhaltesystem (10) im hinteren Bereich (H) des Wagens (30) eine, um eine Drehachse (D5) schwenkbare, Aufnahmeeinheit (13) aufweist.

4. Wagen nach Anspruch 1 bis 3,
- **dadurch gekennzeichnet, dass**
- im hinteren Bereich (H) des Wagens (30) das Spurhaltesystem (10) ein hinteres Verbindemittel (70a) aufweist, an welches die Aufnahmeeinheit (13) und/oder die Eckmodule (41) und/oder der Rahmen (40) fest oder lösbar verbunden vorhanden ist/sind und/oder
- im vorderen Bereich (V) des Wagens (30) das Spurhaltesystem (10) ein vorderes Verbindemittel (70b) aufweist, an welches die Deichseleinheit (50) und/oder die Eckmodule (41) und/oder der Rahmen (40) fest oder lösbar verbunden vorhanden ist/sind.

5. Wagen nach Anspruch 4,
- **dadurch gekennzeichnet, dass**
- das hintere Verbindemittel (70a) und/oder das vordere Verbindemittel (70b) zumindest in einer seiner/ihren Längsrichtungen teleskopierbar und arretierbar ausgebildet ist/sind.

6. Wagen nach einem oder mehreren der vorstehenden Ansprüche,
- **dadurch gekennzeichnet, dass**
- das hintere Verbindemittel (70a) und/oder das vordere Verbindemittel (70b) lösbare und/oder fest verbundene Anschlüsse (71) aufweist/aufweisen, an welchen die Eckmodule (41) und/oder die Aufnahmeeinheit (13) und/ oder die Deichseleinheit (50) und/oder die Lenkrolleneinheiten (16) fest verbunden und/oder lösbar vorhanden ist/sind.

7. Wagen nach einem oder mehreren der vorstehenden Ansprüche,
- **dadurch gekennzeichnet, dass**
- die Lenkrolleneinheiten (16) jeweils eine Aufnahmeplatte (20) aufweisen, welche mindestens eine lösbare oder fest verbundene Gelenkstangenaufnahme (12) aufweist, und/ oder
- ein Lagerelement (19), welches die drehbare Lagerung für die um die Drehachsen (D) schwenkbaren Lenkrollen (17) ausbildet, aufweist.

8. Wagen nach einem oder mehreren der vorstehenden Ansprüche,
- **dadurch gekennzeichnet, dass**
- die Aufnahmeeinheit (13) eine Aufnahmeplatte (15), welche mindestens eine lösbare oder fest verbundene Gelenkstangenaufnahme (12) und eine lösbare oder fest verbundene hintere Zentralgelenkstangenaufnahme (12j) aufweist, aufweist und/oder
- ein Lagerelement (14), welches die drehbare Lagerung für die Aufnahmeplatte (15) ausbildet, aufweist.

9. Wagen nach einem oder mehreren der vorstehenden Ansprüche,
- **dadurch gekennzeichnet, dass**
- die Deichseleinheit (50) eine Aufnahmeplatte (54) aufweist, welche mindestens eine lösbare oder fest verbundene Gelenkstangenaufnahme (12) aufweist und/oder
- einen Deichselkörper (52) mit einem Drehbolzen (55) aufweist, der drehbar um die Drehachse (D6) gelagert an der Aufnahmeplatte (54) der Deichseleinheit (50) vorhanden ist und eine lösbare oder fest verbundene vordere Zentralgelenkstangenaufnahme (12k) aufweist.

10. Wagen nach einem oder mehreren der vorstehenden Ansprüche,
- **dadurch gekennzeichnet, dass**
- das Spurhaltesystem (10) ein hinteres Gestängesystem (60a), bestehend aus einzelnen teleskopierbaren und arretierbaren und/oder starren Elementen (61), und/oder
- ein vorderes Gestängesystem (60b), bestehend aus einzelnen teleskopierbaren und arretierbaren und/oder starren Elementen (62) und/oder
- eine teleskopierbare und arretierbare oder starre Hauptgelenkstange (65) aufweist.

11. Wagen nach einem oder mehreren der vorstehenden Ansprüche,
- **dadurch gekennzeichnet, dass**
- die Elemente (61) des hinteren Gestängesystem (60a) in ihren Endbereichen in Längsrichtung lösbare und/oder fest verbundene Gelenkstangenköpfe (61a) aufweisen, welche an die Gelenkstangenaufnahmen (12) der Aufnahmeeinheit (13) und der Lenkrolleneinheiten (16) anschließbar sind und/oder
- die Elemente (62) des vorderen Gestängesystem (60b) in ihren Endbereichen in Längsrichtung lösbare und/oder fest verbundene Gelenkstangenköpfe (62a) aufweisen, welche an die Gelenkstangenaufnahmen (12) der Aufnahmeplatten (75) und der Deichseleinheit (18) anschließbar sind und/oder
- die Hauptgelenkstange (65) in ihren Endbereiche in Längsrichtung lösbare und/oder fest verbundene Gelenkstangenköpfe (65a) aufweist, welche an die hintere und vordere Zentralgelenkstangenaufnahmen (12j, 12k) anschließbar sind.

12. Wagen nach einem oder mehreren der vorstehenden Ansprüche,
- **dadurch gekennzeichnet, dass**
- die Aufnahmeeinheit (13), die Lenkrolleneinheiten (16) und/oder die Deichseleinheit (50) derart gestaltet ist/sind, dass verschieden große Gelenkstangenaufnahmen (12), anschließbar sind, und/oder
- die Aufnahmeeinheit (13) und/oder die Deichseleinheit (50) derart gestaltet ist, dass verschieden große hintere und vordere Zentralgelenkstangenaufnahmen (12j, 12k) anschließbar sind.

13. Wagen nach einem oder mehreren der vorstehenden Ansprüche,
- **dadurch gekennzeichnet, dass**
- das vordere Verbindemittel (70b) und/oder das hintere Verbindemittel (70a) als jeweils ein, insbesondere gesägtes, Rechteckrohr ausgebildet ist.

14. Wagen nach einem oder mehreren der vorstehenden Ansprüche,
- **dadurch gekennzeichnet, dass**
- die Deichseleinheit (50) lösbare Haltebügel (53) aufweist, mittels derer die Deichseleinheit (50) mit dem Rahmen (40) in Kontakt bringbar ist.

15. Wagen nach einem oder mehreren der vorstehenden Ansprüche,
- **dadurch gekennzeichnet, dass**
- die Deichseleinheit (50), die Lenkrolleneinheit (16) und/ oder das Spurhaltesystem (10) nachrüstbar sind.
